# FASCICULE DE BREVET EUROPEEN

(11) **EP 3 657 210 B1**
(45) Date de publication et mention de la délivrance du brevet: **04.06.2025**
(21) Numéro de dépôt: 19208550.4
(22) Date de dépôt: 12.11.2019
(51) Int. Cl.: G01S 5/00, G01S 19/48, G01S 13/78

(54) **PROCÉDÉ ET SYSTÈME DE NAVIGATION D'AÉRONEF**
NAVIGATIONSVERFAHREN UND -SYSTEM EINES LUFTFAHRZEUGS
METHOD AND SYSTEM FOR NAVIGATING AN AIRCRAFT

(30) Priorité: 13.11.2018 FR 1871548
(43) Date de publication de la demande: 27.05.2020
(73) Titulaire: THALES, 92400 Courbevoie (FR)
(72) Inventeur: RIEDINGER, Marc, 31000 Toulouse (FR); ARETHENS, Jean-Pierre, 26000 Valence (FR); CHAIX, Philippe, 31000 Toulouse (FR)
(74) Mandataire: Lavoix

(56) Documents cités:
- US-A- 3 936 828
- US-A1- 2008 252 511
- RUHNOW W B ET AL: "VOR/DME Automated Station Selection Algorithm", JOURNAL OF THE INSTITUTE OF NAVIGATION, JOHN MURRAY, LONDON, GB, vol. 29, no. 4, 1 February 1983 (1983-02-01), pages 289 - 299, XP002397142, ISSN: 0020-3009

## Description

La présente invention concerne un procédé de navigation d'aéronef et un système de navigation associé.

Elle se situe dans le domaine de la navigation aéronautique sécurisée.

L'Organisation de l'aviation civile internationale ou OACI (en anglais ICAO pour « International Civil Aviation Organization »), qui participe à l'élaboration de normes pour standardiser le transport aéronautique international, a défini la navigation basée sur la performance ou PBN pour « Performance Based Navigation » en anglais.

La navigation PBN consiste à déterminer, à partir de capteurs installés sur l'aéronef, une position spatiale de l'aéronef et d'utiliser cette position pour guider l'aéronef le long d'une route aérienne définie par des points de virage ou « waypoints » en anglais. Les routes aériennes utilisables dans l'aviation civile sont définies par l'OACl.

Afin d'assurer la précision, ce type de navigation nécessite de calculer la position de l'aéronef avec une estimation d'incertitude associée, appelée EPU pour « Estimate of Position Uncertainty »). L'EPU est calculée en faisant l'hypothèse d'absence de panne latente pouvant affecter les mesures utilisées pour le calcul de position. Un niveau de performance de précision de positionnement peut alors être imposé, par exemple une précision à 95% +/- 10 Nm (milles nautiques).

Dans la navigation avec performance requise ou navigation RNP (pour « Required Navigation Performance ») il est en plus préconisé d'implémenter à bord une fonction de surveillance et d'alerte permettant d'assurer un rayon de protection probabiliste autour de la position calculée avec une probabilité de sortie du rayon de protection donnée, par exemple égale à 10⁻⁵/heure. Cette probabilité prend en compte l'hypothèse d'existence de pannes latentes affectant les mesures utilisées pour le calcul de position. Le rayon de protection autour d'une position calculée est appelé HIL pour « Horizontal Integrity Limit ».

En résumé, la navigation RNP impose deux indicateurs de niveau de performance de précision de positionnement, un premier indicateur associé à l'EPU, et un deuxième indicateur associé au HIL. Le calcul de position permettant de respecter ces deux indicateurs sera appelé calcul de position intègre, et la position d'aéronef calculée sera appelée position intègre.

De manière connue, la navigation RNP est mise en œuvre en utilisant un système de positionnement par satellite ou GNSS (pour « Global Navigation Satellite System »). Un aéronef embarque des récepteurs de signaux en provenance de plusieurs satellites permettant de calculer à bord une position de l'aéronef dans un référentiel tridimensionnel donné, qui est par exemple le référentiel ECEF (« Earth Centered, Earth Fixed »).

Cependant, il existe des situations dans lesquelles les signaux des satellites sont faibles ou subissent des interférences, intentionnelles ou non, qui perturbent le calcul de position effectué. De plus, il existe également un risque qu'un des récepteurs GNSS embarqués présente un dysfonctionnement ou une panne.

Le document US2008/252511 A1 décrit un procédé de sélection automatique d'un couple de balises de radionavigation pour une utilisation sur une durée maximale, selon une trajectoire prédite de l'aéronef.

Afin d'améliorer la sécurité de navigation, il est nécessaire de prévoir une solution alternative pour le calcul de position intègre de l'aéronef, qui puisse être mise en œuvre dans la navigation selon une procédure RNP.

Avant le développement des systèmes GNSS, la navigation aérienne utilisait des balises radio, placées au sol et adaptées à émettre des signaux radio avec une portée d'émission donnée. En particulier, il existe des balises radio adaptées à fournir une mesure de distance par rapport à l'aéronef, également appelées équipements DME pour « Distance Measuring Equipement » en anglais.

Dans la suite de la description, le terme balise radio désignera les balises radio de type DME.

Un aéronef muni de capteurs radio adaptés à fonctionner dans la bande de fréquence d'émission des balises radio peut obtenir une estimation de distance par rapport à une balise radio lorsqu'il est dans la portée d'émission de la balise radio. Pour obtenir une position d'aéronef respectant le premier indicateur de performance de précision de positionnement il est nécessaire d'utiliser plusieurs balises radio.

Cependant, le calcul de position à bord utilisant les mesures obtenues par l'intermédiaire de balises radio n'est pas compatible, à l'heure actuelle, avec la navigation RNP. En effet, il n'existe pas de méthode permettant d'obtenir une position intègre respectant le deuxième indicateur de performance de précision de positionnement, implémentable par un système de navigation embarqué qui a des ressources calculatoires limitées.

L'invention a pour objectif de remédier à ce problème.

A cet effet, l'invention propose, selon un premier aspect, un procédé de navigation d'aéronef conforme à la revendication 1.

Avantageusement, le procédé de navigation selon l'invention permet de réaliser, à bord d'un aéronef, un calcul de position intègre permettant d'appliquer la navigation RNP, à partir de balises radio terrestres adaptées à fournir une mesure de distance. Par conséquent, le procédé de l'invention permet une alternative de calcul de position intègre par rapport aux méthodes basées sur les signaux reçus de satellites de positionnement.

Le procédé de navigation selon l'invention peut présenter une ou plusieurs des caractéristiques des revendications dépendantes 2 à 11, prises indépendamment ou en combinaison :
Selon un autre aspect, l'invention concerne un système de navigation d'aéronef conforme à la revendication 13.

Selon un autre aspect, l'invention concerne un programme d'ordinateur comportant des instructions logicielles qui, lorsqu'elles sont mises en œuvre par un dispositif de calcul électronique, mettent en œuvre un procédé de navigation tel que brièvement décrit ci-dessus.

Selon un autre aspect, l'invention concerne un support d'informations, sur lequel sont enregistrées des instructions logicielles qui, lorsqu'elles sont mises en œuvre par un dispositif de calcul électronique, mettent en œuvre un procédé de navigation tel que brièvement décrit ci-dessus.

D'autres caractéristiques et avantages de l'invention ressortiront de la description qui en est donnée ci-dessous, à titre indicatif et nullement limitatif, en référence aux figures annexées, parmi lesquelles :
- la figure 1 est une illustration schématique d'un système de navigation d'aéronef selon un mode de réalisation ;
- la figure 2 illustre schématiquement une cartographie maillée et des projections de routes aériennes sur cette cartographie ;
- la figure 3 est un synoptique des principales étapes d'un premier mode de réalisation d'une phase préalable de détermination de N-uplets de balises radio ;
- la figure 4 est un synoptique des principales étapes d'un deuxième mode de réalisation d'une phase préalable de détermination de N-uplets de balises radio ;
- la figure 5 illustre schématiquement une projection de route aérienne avec des points de séquencement de N-uplets de balises radio ;
- la figure 6 est un synoptique des principales étapes d'un premier mode de réalisation d'une phase de navigation en vol, mettant en œuvre des N-uplets de balises radio déterminés selon le premier mode de réalisation de la phase préalable ;
- la figure 7 est un synoptique des principales étapes d'un deuxième mode de réalisation d'une phase de navigation en vol, mettant en œuvre des N-uplets de balises radio déterminés selon le deuxième mode de réalisation de la phase préalable.

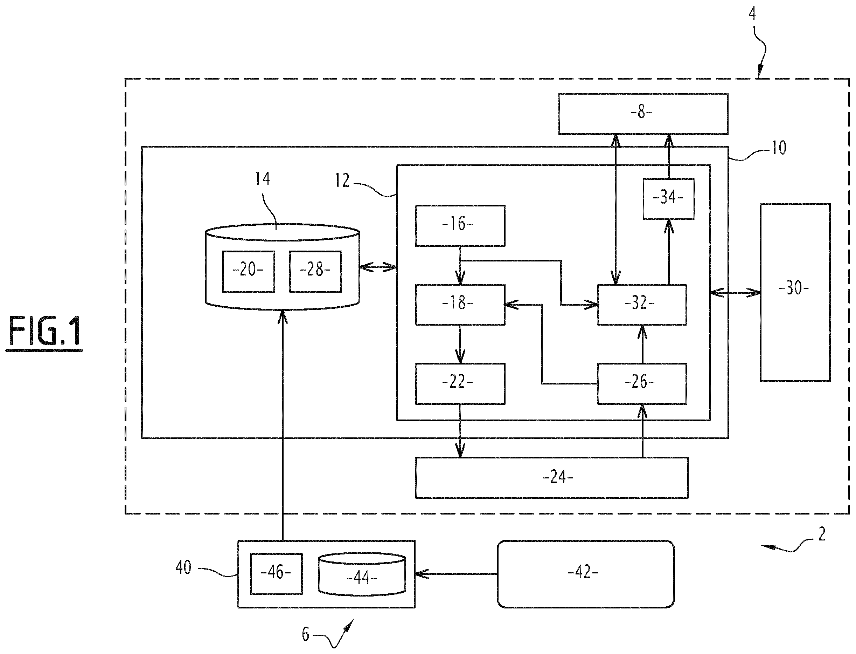

La figure 1 illustre schématiquement un système de navigation 2 selon un mode de réalisation de l'invention.

Le système 2 comporte un système de navigation de bord 4, embarqué à bord de l'aéronef (non représenté) et un système non-embarqué 6, adapté à mettre en œuvre une phase préalable de préparation de données de navigation, i.e. de détermination de N-uplets de balises radio, comme expliqué en détail ci-après.

Le système de navigation de bord 4 a été représenté de manière schématique, seuls les éléments intervenant dans la mise en œuvre de l'invention étant représentés. Il est entendu qu'un système de navigation de bord comporte, de manière connue, d'autres éléments (capteurs, rotacteurs etc) non représentés ici.

Le système de navigation de bord 4 comporte une interface homme-machine (IHM) 8, permettant au(x) pilote(s) d'interagir notamment avec un système FMS (pour « flight management system ») 10, également appelé système de gestion du vol, mis en œuvre par un dispositif de calcul électronique de bord.

L'interface homme-machine 8 comporte, de manière connue, un ou plusieurs écrans, éventuellement tactiles, un ou plusieurs éléments de saisie de commande, et un ou plusieurs microphones.

Le système de gestion du vol 10 est mis en œuvre par un dispositif de calcul électronique, comportant une unité de calcul 12 comportant un ou plusieurs processeurs électroniques adaptés à effectuer des calculs lorsqu'ils sont mis sous tension. Par exemple, des processeurs de type CPU ou GPU sont utilisés.

Le dispositif de calcul électronique comporte en outre une mémoire 14 associée aux processeurs de l'unité de calcul 12.

L'unité de calcul 12 est adaptée à exécuter des modules 16, 18, 22, 26, 32 et 34, réalisés sous forme de briques logicielles, c'est à dire de programmes d'ordinateur, décrits ci-après.

L'unité de calcul 12 met en œuvre un module 16 de calcul d'une position non protégée qui correspond au calcul d'une position par algorithme de triangulation de mesures fournies par les balises radio DME, sans que la géométrie ou le nombre de balises ne permette de calculer une intégrité associée. Par exemple, des mesures de distance fournies par 3 balises radio DME sont utilisées.

La position non protégée est une position de l'aéronef dans un référentiel à trois dimensions choisi, par exemple le référentiel ECEF (« Earth Centered, Earth Fixed ») ou un autre référentiel géoréférencé.

Cette position non protégée est transmise à un module 18 de sélection d'un N-uplet de balises radio {DME₁...DME_{N}} à utiliser pour calculer une position intègre courante de l'aéronef. Un N-uplet de balises radio DME {DME₁...DME_{N}} permet d'obtenir un N-uplet de mesures de distance de l'aéronef par rapport à chacune des balises radio considérée.

De manière connue, le terme N-uplet désigne un ensemble à N éléments.

Ce N-uplet est constitué d'un sous-ensemble des balises radio adaptées à fournir une mesure de distance dans la portée d'émission desquelles se trouve la position courante de l'aéronef.

Le module 18 de sélection est adapté à lire des données relatives à des N-uplets de balises radio mémorisées dans une base de données 20, stockées dans l'unité de mémoire 14. Des modes de réalisation du calcul des données de la base de données 20, effectué dans une phase préalable, seront détaillés ci-après.

Avantageusement, les N-uplets de balises radio mémorisées sont sélectionnés pour permettre le calcul d'une position intègre ayant un rayon de protection associé compatible avec la navigation RNP avec un niveau de performance de précision de positionnement donné. En particulier, la géométrie ou le nombre de balises radio sélectionnées permettent de calculer une intégrité associée.

En particulier, les données mémorisées comprennent un identifiant Idᵢ et une fréquence d'émission Feᵢ de chaque balise radio DMEᵢ faisant partie d'un N-uplet de balises radio.

Les fréquences d'émission Feᵢ sont transmises à un module 22 de réglage de fréquence (ou « tuning ») des récepteurs radio 24 embarqués sur l'aéronef.

Le ou les récepteurs radio 24 comprennent plusieurs canaux de réception réglables sur les fréquences Feᵢ, et suite à la réception d'un signal radio émis par une balise radio DME, sont adaptés à recevoir une mesure de distance par rapport à la balise radio. La distance Dⱼ fournie par une balise radio DMEⱼ est une distance estimée entre la position spatiale de la balise radio dans le référentiel géoréférencé et un point de l'aéronef, au moment de la réception du signal radio émis par la balise radio, dans le même référentiel.

Les distances Dⱼ mesurées sont transmises à un module 26 de calcul de position intègre de l'aéronef. Par exemple, le module 26 met en œuvre un algorithme équivalent au RAIM (pour « Receiver autonomous integrity monitoring ») utilisé pour le GPS. Dans ce type d'algorithme, plusieurs calculs successifs de position sont effectués en excluant successivement des mesures. L'algorithme arrive ainsi à déterminer un cercle d'incertitude correspondant à l'enveloppe des positions calculées avec une mesure défaillante. Le rayon d'un tel cercle est le rayon de protection associé à la position intègre calculée.

De plus, l'algorithme mis en œuvre par le module 26 permet également de rejeter des mesures de distance considérées inutilisables, qui indiquent l'existence d'une panne ou d'une interférence. Les balises radio correspondant aux mesures de distance rejetées sont identifiées et mémorisées, par exemple dans une base de données 28 des balises radio inutilisables.

Si une ou plusieurs mesures de distance sont rejetées, il est possible que la position calculée ne respecte pas les indicateurs de performance prescrits. Dans ce cas, il est prévu d'utiliser un autre N-uplet de balises radio préalablement mémorisé, ne comportant pas de balise radio inutilisable.

Si aucune des mesures de distance n'est rejetée, la position intègre calculée est transmise au système de guidage 30 pour un guidage sécurisé de l'aéronef, et, optionnellement, affichée sous une forme choisie sur l'interface homme-machine 8. La position intègre calculée a une précision EPU associée.

De plus, le système comporte un module 32 de calcul du rayon de protection autour de la position non protégée calculée par le module 16, en utilisant la position intègre de l'aéronef calculée par le module 26, permettant de déterminer si la précision de position et le rayon de protection sont compatibles avec un niveau de performance de précision de positionnement RNP souhaité.

Si le niveau de performance souhaité n'est pas atteint, un module d'émission d'alerte 34 permet d'alerter le ou les pilotes, par transmission d'une alerte à l'IHM 8.

L'alerte émise est par exemple une information affichée sur un écran de visualisation ou une alerte sonore.

Le système de navigation 2 comporte également un dispositif de calcul électronique 40, par exemple installé dans une station de traitement au sol. Ce dispositif de calcul électronique 40 comporte des processeurs de type CPU ou GPU et des unités de mémoire, adaptés à effectuer des grands volumes de calcul sur de grands volumes de données. Le dispositif de calcul 40 reçoit des informations de définition des routes aériennes, par exemple d'un serveur 42 externe. Ces routes aériennes sont par exemple définies par les autorités de navigation comme l'OACl, et peuvent être mises à jour à intervalles temporels réguliers. Les routes aériennes sont mémorisées dans une unité de mémoire 44 du dispositif de calcul électronique 40.

Le dispositif de calcul 40 mémorise des données caractéristiques des balises radio placées au sol, comportant notamment, pour chaque balise radio, sa position dans le référentiel 3D prédéterminé, un identifiant associé, une fréquence d'émission et la portée d'émission de la balise radio.

Le dispositif de calcul 40 met en œuvre un module 46 de détermination, pour au moins une route aérienne donnée, définie par un ensemble de points de virage, au moins un N-uplet de balises radio à utiliser pour calculer une position intègre le long d'un segment de cette route aérienne, correspondant à un survol d'une zone spatiale correspondante.

De préférence, une pluralité de N-uplets est calculée pour chaque segment de route, pour palier d'éventuelles pannes ou incidents pouvant survenir ponctuellement sur une balise radio.

Le nombre N est par exemple égal à 4 ou à 5.

Chaque N-uplet de balises radio permet d'obtenir un calcul de position intègre selon un niveau de performance de précision de positionnement RNP donné, lorsqu'un algorithme donné de calcul de position à partir de N mesures de distance est mis en œuvre.

La sélection de N-uplets de balises radio met en œuvre une combinatoire élevée.

Avantageusement, l'implémentation du module de détermination 46 par un dispositif de calcul électronique d'une station au sol, au préalable de la phase de navigation effective, permet d'effectuer des calculs longs et de tester plusieurs N-uplets possibles pour un point de passage donné, un N-uplet possible étant formé de balises radio dans la portée d'émission desquelles se situe ce point de passage. Par exemple trouver un quintuplet optimal de balises lorsque 20 balises sont visibles représente 15504 arrangements possibles.

Avantageusement, les N-uplets sont calculés et sélectionnés au préalable, et une liste de N-uplets pertinents est embarquée dans la base de données du système de navigation de bord.

Le procédé de navigation pour aéronef selon l'invention comporte deux phases :
- une phase préalable, mise en œuvre par un dispositif de calcul électronique d'une station au sol, de détermination de N-uplets de balises radio permettant de calculer une position intègre d'aéronef, et de mémorisation de données relatives à ces N-uplets, pour une ou plusieurs routes aériennes ;
- une phase de navigation, mise en œuvre par un système de navigation de bord, de calcul de position intègre en vol le long d'une route aérienne donnée.

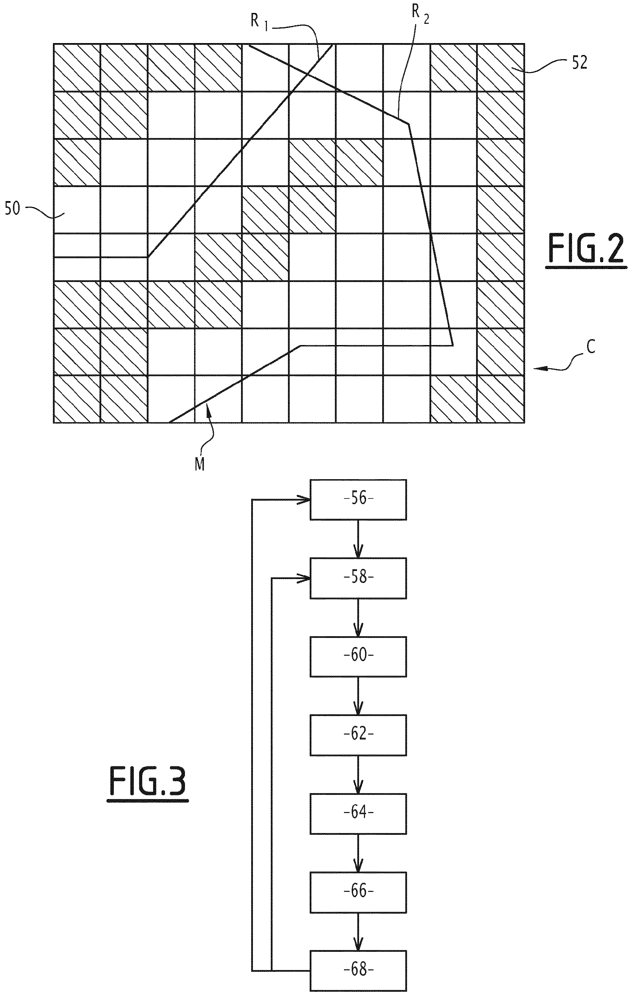

La figure 3 est un synoptique des principales étapes d'un premier mode de réalisation de la détermination et de la mémorisation de N-uplets de balises radio.

Dans ce premier mode de réalisation on utilise une cartographie bidimensionnelle des zones survolées par une ou plusieurs routes aériennes.

La figure 2 illustre schématiquement une telle cartographie C, constituée de mailles M de forme et de taille prédéfinies. Typiquement, les mailles sont définies en arc de latitude et de longitude. Par exemple, des mailles carrées de côté de l'ordre de 5 minutes d'arc sont utilisées.

La cartographie comporte des mailles 50 qui sont survolées par une ou plusieurs routes aériennes, et des mailles 52, qui sont hachurées sur la figure 2 et correspondent à des zones géographiques non survolées par des routes aériennes.

Des exemples de routes aériennes R1, R2 sont illustrés schématiquement.

Le premier mode de réalisation du procédé pour une route aérienne R, décrit en référence à la figure 3, comporte les étapes suivantes.

Tout point appartenant à la route R est dit point de passage de la route R. En particulier, les points de virage (ou « waypoints ») sont des points de passage.

Lors d'une première étape 56, les mailles intersectées par des segments de la route R sont déterminées.

Pour chaque maille (étape 58), on détermine à l'étape 60 les L balises radio visibles, c'est-à-dire telles qu'un aéronef survolant la maille considérée à une altitude de vol inférieure à une valeur prédéterminée reçoit les signaux radio émis par ces balises radio.

Le nombre L est par exemple compris entre 0 et 100. Bien entendu, le nombre L de balises visibles peut varier d'une maille à une autre.

L'étape 60 de détermination de L balises radio visibles est suivie de l'étape 62 de détermination d'un ou plusieurs N-uplets de balises radio permettant d'atteindre un niveau de performance de précision de positionnement RNP donné.

De préférence, le nombre N est largement inférieur à L, par exemple N est compris entre 3 et 5.

Dans un mode de réalisation, le nombre N est choisi en cohérence avec le nombre de canaux de réception des dispositifs récepteurs radio embarqués à bord d'un aéronef.

Dans un mode de réalisation, tous les sous-ensembles de N balises radio parmi les L balises radio visibles sont testés par rapport à un vol simulé le long de la route R : pour chaque N-uplet de balises radio RB_{K}={DME_{K},₁,..., DME_{K},_{N}}, les mesures de distance {D_{K},₁,...,D_{K},_{J}} sont estimées en un point de la route simulée, de position spatiale de référence connue, et un algorithme de calcul de position estimée d'aéronef à partir des distances {D_{K},₁,...,D_{K},_{J}} est mis en œuvre. Les indicateurs de niveau de performance de précision de positionnement sont également estimés pour le N-uplet de balises radio RB_{K} considéré.

Seuls les N-uplets de balises radio {RB_{K}} permettant d'obtenir un niveau de performance requis sont retenus à l'issue de l'étape 62.

Pour chaque N-uplet de balises radio sélectionné à l'étape 62, on met en œuvre, optionnellement, une étape 64 de test de N-uplets formés de N-1 balises radio, permettant d'obtenir un N-uplet de mesures en ajoutant une mesure d'altitude de l'aéronef aux N-1 mesures de distance par rapport aux N-1 balises radio DME sélectionnées.

Finalement seuls les N-uplets de balises radio dont le rayon de protection associé est inférieur à une valeur prédéterminée, par exemple comprise entre 0,6 Nm à 2 Nm, sont sélectionnés à l'étape 66 et mémorisés dans une liste associée à la maille courante.

Ensuite, pour chaque N-uplet sélectionné, à l'étape de mémorisation 68 des données représentatives des balises radio, sont mémorisés : les identifiants des balises radio formant le N-uplet, leurs fréquences d'émission.

Par exemple, on mémorise 1 à 2*N N-uplets de balises radio par maille de la cartographie.

Dans un mode de réalisation, les N-uplets de balises radio sont mémorisés dans l'ordre des rayons de protection croissants pour chaque maille.

Les étapes 58 à 68 sont répétées pour chaque maille sélectionnée à l'étape 56.

Avantageusement, les listes de N-uplets de balises radio sont mémorisées en association avec des mailles d'une cartographie, donc si plusieurs routes survolent les mêmes zones de terrain, les N-uplets de balises radio sélectionnés peuvent être utilisés, il n'est pas nécessaire de refaire des calculs.

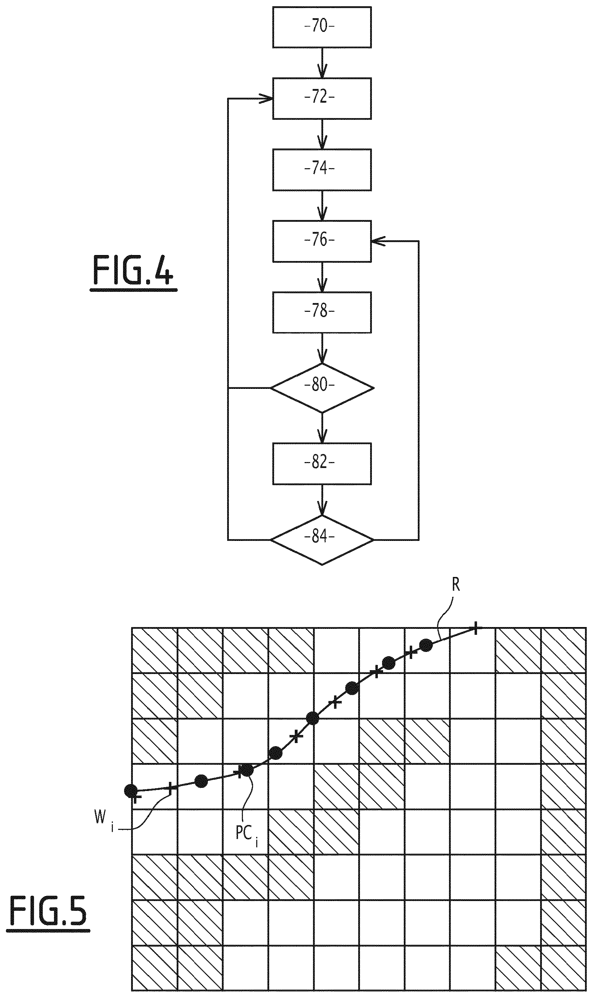

La figure 4 est un synoptique des principales étapes d'un deuxième mode de réalisation de la détermination et de la mémorisation de N-uplets de balises radio pour une route aérienne définie par des points de virage (ou « waypoints ») donnés.

A la différence du premier mode de réalisation, on n'utilise pas de maillage du terrain survolé par la route aérienne.

Dans ce deuxième mode de réalisation, des points de séquencement de N-uplets de balises radio sont déterminés le long d'une route aérienne R choisie. Un N-uplet de balises radio est associé à un segment de route compris entre deux points de séquencement.

Le procédé selon ce deuxième mode de réalisation comprend une première étape d'initialisation 70, comportant l'obtention d'une liste de coordonnées de points de passage de la route R définis dans un référentiel 2D ou 3D et espacés d'un pas d'avancement P le long de la route. Le pas d'avancement P est une distance, de préférence comprise entre 0,5Nm et 2Nm.

On initialise le point de passage courant sur la trajectoire avec le point initial de la trajectoire.

L'étape suivante (étape 72) est la recherche d'un N-uplet au point de passage courant qui permet le calcul d'un rayon de protection inférieur à un seuil RNPMin, par exemple égal à 0,6Nm, ou qui fournit la valeur minimale du rayon de protection comprise entre 0,6Nm et 2Nm si l'on n'arrive pas à trouver un N-uplet qui donne une valeur inférieure à 0,6Nm.

Elle est suivie d'une étape 74 de mémorisation du N-uplet qui donne la performance souhaitée, pour un segment de trajectoire ayant une première extrémité égale au point de passage courant. Ce N-uplet devient le N-uplet courant. Le point de passage courant est un point de séquencement des N-uplets de la route.

Un avancement d'un pas P sur la trajectoire est effectué. Le point sur la trajectoire devient le point de passage courant (étape 76).

A l'étape suivante 78 est effectuée une recherche des balises radio DME visibles au point de passage courant.

L'étape 80 consiste à déterminer si les balises radio DME du N-uplet courant sont visibles depuis le point de passage courant.

Si une des balises radio DME du N-uplet courant n'est plus visible, le point de passage courant est la deuxième extrémité du segment associé au N-uplet courant. Ensuite on repasse à l'étape 72, de détermination d'un nouvel N-uplet de balises radio fournissant la performance souhaitée. Sinon on poursuit avec l'étape 82 qui consiste à calculer le rayon de protection de la position calculée à partir des mesures fournies par les balises radio DME du N-uplet courant.

L'étape suivante 84 consiste à comparer le rayon de protection ainsi calculé à une valeur maximale de seuil prédéterminée RNPmax, par exemple égale à 1,6Nm, et de préférence comprise entre 1,6Nm et 2Nm.

Si la valeur du rayon de protection est inférieure à RNPMax, on recommence à l'étape 76, sauf si le point de passage courant est le dernier point de la trajectoire, auquel cas le processus s'arrête.

Sinon, l'étape 84 est suivie de l'étape 72 préalablement décrite.

Un N-uplet permettant d'obtenir un rayon de protection inférieur à RNPMax est dit N-uplet nominal.

Une fois qu'on a fini le processus dans le cas nominal, c'est-à-dire qu'on a déterminé tous les N-uplets le long de la trajectoire permettant de calculer une position protégée par un rayon de protection inférieur à RNPMax à partir des mesures de distance par rapport aux radio balises définies par ces N-uplets, on recommence le processus pour déterminer la sélection à considérer dans les cas dégradés où une des balises radio DME prévue dans un N-uplet ne serait pas disponible.

En d'autres termes, on établit la liste des balises radio DME considérées dans tous les N-uplets {DMEₖ}, et pour chacune des balises radio DMEₖ de cette liste, on recommence le processus de recherche en éliminant de la base de données la balise radio DME_{K} considérée. On obtient alors en chaque point où la balise radio DMEₖ est considérée dans le cas nominal, une liste alternative de N-uplet à considérer en cas d'absence ou de détection de panne sur la balise radio DMEₖ.

Avantageusement, dans ce deuxième de mode réalisation, le nombre de points de séquencement auxquels sont associés des N-uplets de balises radio permettant de respecter le niveau de performance de précision de positionnement donné est minimisé.

La figure 5 illustre schématiquement une route aérienne R, des points de passage Wᵢ définissant cette route et des points de séquencement PCᵢ de N-uplets de balises radio sélectionnés par mise en œuvre du procédé selon le deuxième mode de réalisation décrit ci-dessus.

Les données associées aux N-uplets de balises radio sélectionnés, pour au moins une route aérienne donnée, selon le premier ou selon le deuxième mode de réalisation décrit ci-dessus, sont mémorisées dans une base de données 20 destinée à être embarquée ou rendue accessible pour son utilisation dans une phase de vol effectif par un système de navigation d'aéronef embarqué.

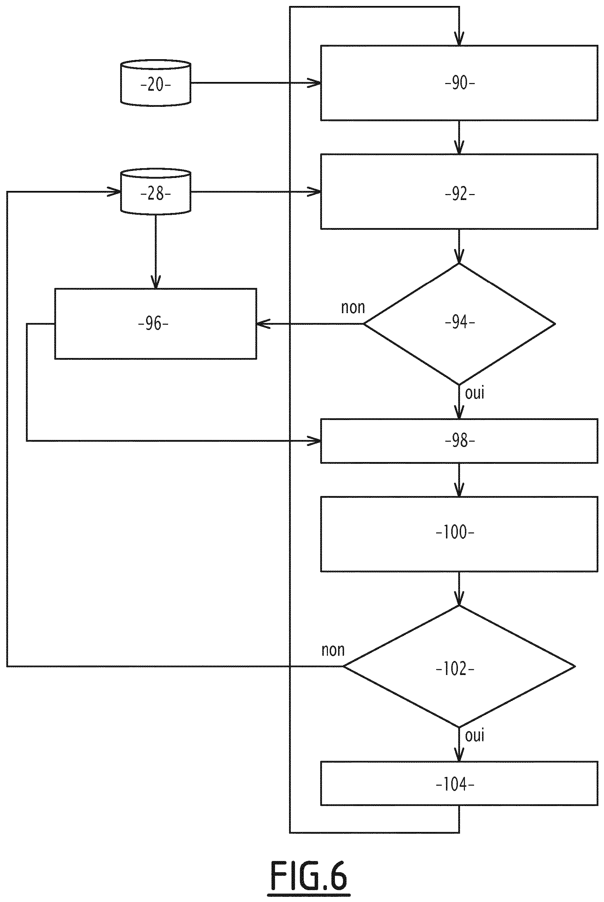

La figure 6 est un synoptique des principales étapes d'un premier mode de réalisation d'un procédé de navigation en phase de vol, utilisant une base de données 20 dans laquelle sont enregistrées des données relatives à des N-uplets de balises radio associés à des mailles d'une cartographie.

Dans ce premier mode de réalisation on utilise une cartographie bidimensionnelle des zones survolées par une ou plusieurs routes aériennes, telle qu'illustrée schématiquement dans la figure 2.

Les étapes sont de préférence mises en œuvre par exécution d'un programme d'ordinateur par un ou des processeurs du système de navigation de bord 10.

Lors d'une première étape 90, la maille associée à la position courante de l'aéronef, dite maille courante, est déterminée par rapport à une position précédente de l'aéronef. Initialement, la position courante de l'aéronef est la position du point de départ de la route aérienne à suivre.

Par exemple, la détermination de la maille associée à la position courante se fait par rapport aux coordonnées de latitude et longitude définissant les mailles de la cartographie enregistrées dans la base de données 20.

Ensuite une étape 92 de sélection d'un N-uplet de balises radio utilisable est mise en œuvre. Lors de cette étape, les N-uplets de balises radio associés à la maille courante enregistrés dans la base de données sont considérés dans l'ordre de rayons de protection croissants, et pour chaque N-uplet, il est vérifié si aucune balise radio du N-uplet n'a été marquée comme étant non utilisable. Si toutes les balises radio du N-uplet considéré sont utilisables, ce N-uplet est retenu à l'étape 92.

Si aucun N-uplet de balises radio valides n'a été trouvé à l'étape de vérification 94, cette étape est suivie d'une étape 96 de mise en œuvre d'un algorithme classique de sélection de balises radio, par exemple par recherche de 3 balises DME présentant une configuration géométrique permettant de maximiser la valeur minimale des angles du triangle formé par ces balises. Le N-uplet de balises radio ainsi sélectionné sera utilisé lors de l'étape 98 décrite ci-après.

Si un N-uplet RB={DME₁,..., DME_{N}} de balises radio valides a été retenu, l'étape 94 est suivie de l'étape 98 de réglage des canaux fréquentiels des dispositifs récepteurs radio embarqués en fonction des fréquences d'émission des balises radio du N-uplet sélectionné.

Une réception de mesures de distance {D₁...D_{N}} et une vérification de cohérence est appliquée à l'étape 100.

De manière classique, chaque balise radio DMEᵢ émet son identifiant et des informations permettant de calculer la distance entre cette balise et un point de l'aéronef ou une mesure de distance entre la balise et l'aéronef.

La vérification de cohérence mise en œuvre comprend la comparaison de l'identifiant reçu à l'identifiant de la balise radio DMEᵢ extrait de la base de données 20, et la comparaison (étape 102) de la mesure de distance obtenue par rapport à une distance estimée en utilisant la position spatiale précédente.

En cas de constatation d'incohérence (réponse non à l'étape 102), par exemple lorsque l'écart entre mesure de distance obtenue et la distance estimée est supérieur à un seuil de distance prédéterminé, la balise radio DMEᵢ est identifiée comme non utilisable dans la base de données 28 de balises radio à ne pas utiliser. De plus, le procédé retourne à l'étape 92 de sélection d'un N-uplet de balises radio utilisables.

En cas de vérification de cohérence, l'étape 102 est suivie d'une étape 104 de calcul de position intègre, ainsi que des indicateurs de niveau de performance de précision de positionnement associés. Il s'agit des indicateurs de précision (EPU) et d'intégrité (HIL). La position intègre est fournie comme nouvelle position courante, et est également transmise au système de guidage 30 pour un guidage sécurisé de l'aéronef.

L'algorithme de calcul de la position intègre à partir des mesures de distance Dᵢ reçues de balises radio DMEᵢ est le même que celui utilisé lors de la phase préalable de détermination des N-uplets de balises radio.

En variante non représentée, dans le cas particulier où il n'est pas possible de déterminer quelle balise radio DMEᵢ fournit une mesure de distance incohérente, une alarme est levée.

Selon une variante, en plus de valeurs de distance obtenues à partir d'un N-uplet de balises radio DME, une estimation d'altitude est utilisée.

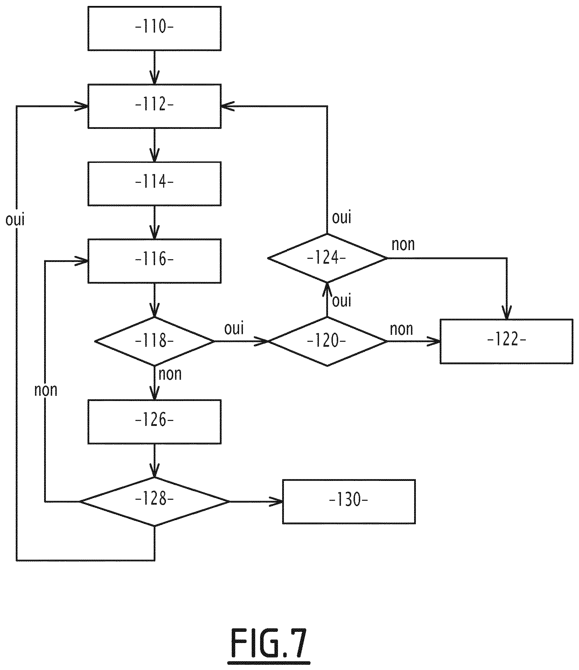

La figure 7 est un synoptique des principales étapes d'un deuxième mode de réalisation d'un procédé de navigation en phase de vol, utilisant une base de données 20 dans laquelle sont enregistrées des données relatives à une liste de points de séquencement de N-uplets de balises radio à utiliser pour le calcul de position intègre le long d'une route aérienne choisie.

Les étapes sont de préférence mises en œuvre par exécution d'un programme d'ordinateur par un ou des processeurs du système de navigation de bord 10.

Le procédé commence par une étape d'initialisation 110, de sélection du premier point de séquencement de la route protégée ayant au moins un N-uplet de balises radio associé préalablement mémorisé.

Ensuite à l'étape 112 est sélectionné un N-uplet de balises radio associé au point de séquencement courant, pour le segment de la route s'étendant entre le point de séquencement courant et le point de séquencement suivant selon la route aérienne en cours. Cette sélection est le N-uplet nominal au point courant si aucune des balises radio DME de cette liste n'est indiquée inutilisable, ou la sélection alternative en cas de présence d'une ou plusieurs balises radio inutilisable(s) dans le N-uplet nominal.

Une étape 114 de réglage fréquentiel (ou « tuning » en anglais) sur les canaux fréquentiels de communication radio des balises radio du N-uplet de balises radio sélectionné est mise en œuvre. Des mesures de distance sont obtenues.

Ensuite est effectuée l'étape 116 de calcul de la position intègre (position courante de l'aéronef) réalisée à partir des mesures de distance obtenues à l'étape précédente.

L'algorithme de calcul met en œuvre une vérification de cohérence analogue à celle décrite en référence à l'étape 100.

Quand une incohérence est détectée pendant une durée supérieure ou égale à une durée donnée, par exemple pendant plus de 30 secondes consécutives (étape 118), une alarme est levée (étape 122) si l'on ne sait pas déterminer la balise radio qui est à l'origine de l'incohérence (étape 120).

Si la balise radio à l'origine de l'incohérence est identifiée (réponse « oui » à l'étape 120), il est vérifié à l'étape 124 s'il existe un N-uplet alternatif associé au point courant et qui ne contient pas la balise radio identifiée. S'il existe un tel N-uplet, l'étape 124 est suivie de l'étape 112 précédemment décrite. Sinon, l'étape 124 est suivie de l'étape 122 de levée d'alarme.

Si aucune incohérence n'est détectée, la position intègre calculée à l'étape 116 est fournie comme nouvelle position courante, et est également transmise au système de guidage 30 pour un guidage sécurisé de l'aéronef.

Si aucune incohérence n'est détectée à l'étape 118 pendant une durée supérieure ou égale à une durée donnée, elle est suivie d'une étape 126 de détermination de la distance du point courant au prochain point de séquencement.

Tant que le point de séquencement suivant n'est pas atteint (réponse « non » à l'étape 128), les étapes 116 à 126 sont répétées.

Lorsque le prochain point de séquencement est atteint (réponse « oui » à l'étape 128), le procédé repasse à l'étape 112, le prochain point de séquencement devient le point de séquencement courant et un nouvel N-uplet de balises radio associé au point de séquencement courant est sélectionné. Les étapes 114 à 128 sont répétées. Si le point de séquencement suivant atteint est le dernier point de passage de la route aérienne, le procédé prend fin (étape 130).

## Revendications

1. Procédé de navigation d'aéronef le long d'une route aérienne prédéterminée, fournissant une intégrité de positionnement de l'aéronef en cours de vol par rapport à ladite route respectant un niveau de performance de précision de positionnement attendu, l'aéronef comportant au moins un récepteur radio embarqué adapté à communiquer avec au moins une balise radio terrestre adaptée à fournir une distance de l'aéronef par rapport à ladite balise radio,
comportant lors de sa mise en œuvre en phase de navigation de l'aéronef, des étapes de:
a) à partir d'une position courante de l'aéronef, obtention (92, 112), à partir de données mémorisées (20), d'un N-uplet de balises radio à utiliser,
b) obtention (98-100, 114) d'une mesure de distance de l'aéronef par rapport à chacune des N balises radio dudit N-uplet,
c) calcul (104, 116) d'une position intègre, avec un rayon de protection probabiliste autour de la position intègre calculée, à partir des mesures de distance obtenues par une méthode de calcul prédéterminée,
d) utilisation de la position intègre calculée comme position intègre courante pour guider l'aéronef, **caractérisé en ce qu'**il comporte une phase préalable de détermination de N-uplets de balises radio, mise en œuvre par un dispositif de calcul non embarqué à bord de l'aéronef, comportant des étapes consistant à, pour au moins un segment associé à ladite route aérienne, déterminer (60-68 ; 70-84) au moins un N-uplet de balises radio utilisable pour calculer, en appliquant ladite méthode de calcul, une position intègre de l'aéronef lorsqu'il survole une zone spatiale associée audit segment selon ledit niveau de performance de précision de positionnement attendu, et mémoriser des données relatives N-uplets de balises radio déterminés dans une base de données.

2. Procédé selon la revendication 1, dans lequel chaque segment de la route est défini par deux points d'extrémités dits points de séquencement, la détermination comprenant une détermination desdits points de séquencement à partir de points de passage définissant ladite route aérienne, les points de passage étant espacés d'un pas d'avancement prédéterminé, deux segments successifs le long de ladite route ayant des N-uplets de balises radio associés différents.

3. Procédé selon la revendication 1, dans lequel les zones spatiales survolées sont représentées sur une cartographie maillée, le procédé comportant des étapes de :
- détermination (56) d'une succession de mailles (50) de ladite cartographie survolées par ladite route aérienne,
- pour chacune des mailles (50), détermination (60, 62, 64) d'au moins N-uplet de balises radio permettant de calculer une position intègre d'un aéronef survolant ladite maille (50) de ladite cartographie.

4. Procédé selon l'une des revendications 1 à 3, dans lequel la détermination d'un N-uplet de balises radio comporte un test d'une pluralité de N-uplets de balises radio chaque N-uplet comportant N balises radio sélectionnées parmi un nombre L supérieur à N de balises radio à portée de réception d'un aéronef survolant ladite zone spatiale, le test comprenant, pour chaque N-uplet de balises radio testées, une obtention de N mesures de distance, chaque mesure de distance étant fournie par une desdites balises radio, et un calcul de position intègre et d'un rayon d'intégrité associé, et une comparaison du rayon d'intégrité à une valeur de seuil déterminée en fonction du niveau de performance de précision de positionnement attendu.

5. Procédé selon l'une quelconque des revendications 1 à 4, comportant, dans la phase de navigation de l'aéronef, lors de l'étape a) d'obtention d'un N-uplet de balises radio, une sélection (92) d'un N-uplet de balises radio et une vérification (94) de disponibilité de chacune des balises radio dudit N-uplet de balises radio sélectionné, et en cas de non disponibilité, sélection d'un autre N-uplet de balises radio à partir de la base de données mémorisées.

6. Procédé selon l'une des revendications 3 ou 4, comportant, dans la phase de navigation de l'aéronef, une détermination (90), à partir de la position courante de l'aéronef, d'une maille de cartographie correspondante, et l'obtention d'un N-uplet de balises radio associé à la maille correspondante déterminée.

7. Procédé selon la revendication 2, comportant, dans la phase de navigation de l'aéronef, une détermination, à partir d'une position courante de l'aéronef associée à un point de séquencement courant, une sélection (112) d'un N-uplet de balises radio mémorisées en association avec un segment défini par le point de séquencement courant et un point de séquencement suivant le long de la route aérienne de l'aéronef.

8. Procédé selon la revendication 7, comportant une vérification (128) d'atteinte par l'aéronef du point de séquencement suivant, et une obtention d'un nouvel N-uplet de balises radio à utiliser suite au dépassement dudit point de séquencement suivant.

9. Procédé selon l'une quelconque des revendications 1 à 8, comportant en outre, suite à l'étape b) d'obtention de mesures de distance, une vérification de cohérence (100-102 ; 118-120) des mesures de distance obtenues, et, en cas d'incohérence, une détermination d'une balise radio fournissant une mesure de distance incohérente et, en cas de détermination réussie, une mémorisation, dans une base de données de balises radio non utilisables, d'un identifiant de la ou de chaque balise radio fournissant une mesure incohérente.

10. Procédé selon la revendication 9, comportant, en outre, une levée d'alarme (122) en cas de constatation d'incohérence.

11. Procédé selon l'une quelconque des revendications 1 à 10, comportant, préalablement à l'obtention d'une mesure de distance, un réglage (98 ; 114) d'au moins un récepteur radio embarqué sur une fréquence d'émission d'une balise radio dudit N-uplet.

12. Programme d'ordinateur comportant des instructions logicielles qui, lorsqu'elles sont mises en œuvre par un dispositif de calcul électronique, mettent en œuvre un procédé de navigation selon les revendications 1 à 11.

13. Système (2) de navigation d'aéronef le long d'une route aérienne prédéterminée, comportant un système de navigation de bord (4) embarqué et comportant un dispositif de calcul électronique comportant au moins un processeur (12) et une unité de mémoire (14), fournissant une intégrité de positionnement de l'aéronef en cours de vol par rapport à ladite route respectant un niveau de performance de précision de positionnement attendu, et au moins un récepteur radio (24) embarqué sur l'aéronef adapté à communiquer avec au moins une balise radio terrestre adaptée à fournir une distance de l'aéronef par rapport à ladite balise radio,
le système (2) comportant des modules, mis en œuvre en phase de navigation de l'aéronef, comportant :
- un module (18) configuré pour obtenir, à partir d'une position courante de l'aéronef, à partir de données (20, 28) mémorisées dans ladite unité de mémoire (14), un N-uplet de balises radio à utiliser,
- un module (22) configuré pour obtenir par au moins un desdits récepteurs embarqués une mesure de distance de l'aéronef par rapport à chacune des N balises radio dudit N-uplet,
- un module (26) configuré pour calculer une position intègre, avec un rayon de protection probabiliste autour de la position intègre calculée, à partir des mesures de distance obtenues par une méthode de calcul prédéterminée, et
- un module (30) configuré pour utiliser la position intègre calculée comme position intègre courante, **caractérisé en ce que** le système comporte en outre un système non-embarqué (6), adapté à mettre en œuvre une phase préalable de préparation de données de navigation, comportant un dispositif de calcul électronique (40) adapté à mettre en œuvre un module (46) de détermination de N-uplets de balises radio, configuré pour, pour au moins un segment associé à ladite route aérienne, déterminer (60-68 ; 70-84) au moins un N-uplet de balises radio utilisable pour calculer, en appliquant ladite méthode de calcul, une position intègre de l'aéronef lorsqu'il survole une zone spatiale associée audit segment selon ledit niveau de performance de précision de positionnement attendu et mémoriser des données relatives N-uplets de balises radio déterminés dans une base de données.

## Patentansprüche

1. Navigationsverfahren eines Luftfahrzeugs entlang einer vorbestimmten Flugroute, das eine Positionierungsintegrität des Luftfahrzeugs während des Flugs in Bezug auf die Route bereitstellt, die ein erwartetes Leistungsniveau der Positionsgenauigkeit erfüllt, das Luftfahrzeug mindestens umfassend einen Funkempfänger an Bord, der angepasst ist, um mit mindestens einer terrestrischen Funkbake zu kommunizieren, die angepasst ist, um einen Abstand des Luftfahrzeugs in Bezug auf die Funkbake bereitzustellen,
umfassend bei seiner Durchführung in einer Navigationsphase des Luftfahrzeugs die folgenden Schritte:
a) anhand einer aktuellen Position des Luftfahrzeugs, Erlangen (92, 112), anhand gespeicherter Daten (20), eines N-Tupels von zu verwendenden Funkbaken,
b) Erlangen (98-100, 114) einer Abstandsmessung des Luftfahrzeugs von jeder der N Funkbaken des N-Tupels,
c) Berechnen (104, 116) einer Integritätsposition mit einem probabilistischen Schutzradius um die berechnete Integritätsposition anhand der Abstandsmessungen, die durch ein vorbestimmtes Berechnungsverfahren erlangt werden,
d) Verwenden der berechneten Integritätsposition als aktuelle Integritätsposition, um das Luftfahrzeug zu führen, **dadurch gekennzeichnet, dass** es eine vorherige Phase eines Bestimmens von N-Tupeln von Funkbaken umfasst, die von einer Rechenvorrichtung durchgeführt wird, die nicht an Bord des Luftfahrzeugs ist, umfassend Schritte, die, für mindestens ein Segment, das mit der Flugroute assoziiert ist, aus einem Bestimmen (60-68; 70-84) mindestens eines N-Tupels von Funkbaken, das unter Anwendung des Berechnungsverfahrens zum Berechnen einer Integritätsposition des Luftfahrzeugs beim Überfliegen eines mit dem Segment assoziierten Raumbereichs gemäß dem erwarteten Leistungsniveau der Positionierungsgenauigkeit verwendbar ist, und Speichern von Daten, die sich auf die bestimmten N-Tupel von Funkbaken beziehen, in einer Datenbank, bestehen.

2. Verfahren nach Anspruch 1, wobei jedes Segment der Route durch zwei Endpunkte, bezeichnet als Sequenzierungspunkte, definiert ist, die Bestimmung umfassend eine Bestimmung der Sequenzierungspunkte anhand von Wegpunkten, die die Flugroute definieren, wobei die Wegpunkte in einem vorbestimmten Vorwärtsbewegungsabstand beabstandet sind, wobei zwei aufeinanderfolgende Segmente entlang der Route unterschiedliche N-Tupel von assoziierten Funkbaken aufweisen.

3. Verfahren nach Anspruch 1, wobei die überflogenen Raumbereiche auf einer Netzkartographie dargestellt sind, das Verfahren umfassend die folgenden Schritte:
- Bestimmen (56) einer Folge von Netzen (50) der Kartografie, die von der genannten Flugroute überflogen werden,
- Bestimmung (60, 62, 64), für jedes der Netze (50), von mindestens N-Tupel von Funkbaken, die es ermöglichen, eine Integritätsposition eines Luftfahrzeugs zu berechnen, das das Netz (50) der Kartografie überfliegt.

4. Verfahren nach einem der Ansprüche 1 bis 3, wobei das Bestimmen eines N-Tupel von Funkbaken einen Test einer Vielzahl von N-Tupeln von Funkbaken umfasst jedes N-Tupel umfassend N Funkbaken, die ausgewählt sind aus einer Anzahl L größer als N Funkbaken, die sich in Empfangsreichweite eines Luftfahrzeugs befinden, das den Raumbereich überfliegt, der Test umfassend für jedes getestete N-Tupel von Funkbaken ein Erlangen von N Abstandsmessungen, wobei jede Abstandsmessung von einer der Funkbaken bereitgestellt wird, und eine Berechnen der Integritätsposition und eines assoziierten Integritätsradius, und ein Vergleichen des Integritätsradius mit einem Schwellenwert, der abhängig von dem erwarteten Leistungsniveau der Positionierungsgenauigkeit bestimmt wird.

5. Verfahren nach einem der Ansprüche 1 bis 4, umfassend, in der Navigationsphase des Luftfahrzeugs bei dem Schritt a) eines Erlangens eines N-Tupel von Funkbaken, ein Auswählen (92) eines N-Tupel von Funkbaken und ein Überprüfen (94) der Verfügbarkeit von jedem der Funkbaken des ausgewählten N-Tupels von Funkbaken und im Fall einer Nichtverfügbarkeit ein Auswählen eines anderen N-Tupel von Funkbaken aus der gespeicherten Datenbasis.

6. Verfahren nach einem der Ansprüche 3 oder 4, umfassend, in der Navigationsphase des Luftfahrzeugs, ein Bestimmen (90), anhand der aktuellen Position des Luftfahrzeugs, eines entsprechenden Kartierungsnetzes und ein Erlangen eines N-Tupels von Funkbaken, die mit dem bestimmten entsprechenden Netz assoziiert sind.

7. Verfahren nach Anspruch 2, umfassend, in der Navigationsphase des Luftfahrzeugs, ein Bestimmen, anhand einer aktuellen Position des Luftfahrzeugs, die mit einem aktuellen Sequenzierungspunkt assoziiert ist, eine Auswahl (112) eines N-Tupels von gespeicherten Funkbaken in Assoziierung mit einem Segment, das durch den aktuellen Sequenzierungspunkt und einen nächsten Sequenzierungspunkt entlang der Flugroute des Luftfahrzeugs definiert ist.

8. Verfahren nach Anspruch 7, umfassend ein Überprüfen (128) des Erreichens des nächsten Sequenzierungspunkts durch das Luftfahrzeug, und ein Erlangen eines neuen N-Tupels von Funkbaken, die infolge eines Überschreitens des nächsten Sequenzierungspunkts zu verwenden sind.

9. Verfahren nach einem der Ansprüche 1 bis 8, ferner umfassend, nach dem Schritt b) eines Erlangens von Abstandsmessungen ein Kohärenzüberprüfen (100-102; 118-120) der erlangten Abstandsmessungen und im Fall einer Inkonsistenz ein Bestimmen einer Funkbake, die eine inkonsistente Abstandsmessung bereitstellt, und im Fall einer erfolgreichen Bestimmung ein Speichern einer Kennung der oder jeder Funkbake, die eine inkonsistente Messung bereitstellt, in einer Datenbank für nicht verwendbare Funkbaken.

10. Verfahren nach Anspruch 9, ferner umfassend eine Alarmerhebung (122) bei Feststellung einer Inkonsistenz.

11. Verfahren nach einem der Ansprüche 1 bis 10, umfassend, vor dem Erlangen einer Abstandsmessung eine Einstellung (98; 114) von mindestens einem Funkempfänger an Bord auf eine Sendefrequenz einer Funkbake des N-Tupels.

12. Computerprogramm, umfassend Softwareanweisungen, die, wenn sie von einer elektronischen Rechenvorrichtung durchgeführt werden, ein Navigationsverfahren nach den Ansprüchen 1 bis 11 durchführen.

13. System (2) zur Navigation eines Luftfahrzeugs entlang einer vorbestimmten Flugroute, umfassend ein Bordnavigationssystem (4) an Bord und umfassend eine elektronische Rechenvorrichtung, umfassend mindestens einen Prozessor (12) und eine Speichereinheit (14) umfasst, die eine Positionierungsintegrität des Luftfahrzeugs während des Flugs in Bezug auf die Route bereitstellt, die ein Leistungsniveau der erwarteten Positionierungsgenauigkeit einhält, und mindestens einen Funkempfänger (24) an Bord des Luftfahrzeugs, der angepasst ist, um mit mindestens einer terrestrischen Funkbake zu kommunizieren, die angepasst ist, um einen Abstand des Luftfahrzeugs in Bezug auf die Funkbake bereitzustellen,
das System (2) umfassend Module, die in der Navigationsphase des Luftfahrzeugs durchgeführt werden, umfassend:
- ein Modul (18), das konfiguriert ist, um anhand einer aktuellen Position des Luftfahrzeugs anhand von Daten (20, 28), die in der Speichereinheit (14) gespeichert sind, ein N-Tupel von zu verwendenden Funkbaken zu erlangen,
- ein Modul (22), das konfiguriert ist, um durch mindestens einen der Bordempfänger eine Abstandsmessung des Luftfahrzeugs zu jedem der N Funkbaken des N-Tupels zu erlangen,
- ein Modul (26), das konfiguriert ist, um anhand der Abstandsmessungen, die durch ein vorbestimmtes Berechnungsverfahren erlangt werden, eine Integritätsposition mit einem probabilistischen Schutzradius um die berechnete Integritätsposition zu berechnen, und
- ein Modul (30), das konfiguriert ist, um die berechnete Integritätsposition als aktuelle Integritätsposition zu verwenden, **dadurch gekennzeichnet, dass** das System ferner ein nicht an Bord befindliches System (6) umfasst, das angepasst ist, um eine vorherige Navigationsdaten-Vorbereitungsphase durchzuführen, umfassend eine elektronische Rechenvorrichtung (40), die angepasst ist, um ein Modul (46) zur Bestimmung von N-Tupeln von Funkbaken durchzuführen, das konfiguriert ist, um für mindestens ein Segment, das mit der Flugroute assoziiert ist, mindestens ein N-Tupel von Funkbaken zu bestimmen (60-68; 70-84), das unter Anwendung des Berechnungsverfahrens zum Berechnen einer Integritätsposition des Luftfahrzeugs beim Überfliegen eines mit dem Segment assoziierten Raumbereichs gemäß dem erwarteten Leistungsniveau der Positionierungsgenauigkeit verwendbar ist, und Speichern von Daten, die sich auf die bestimmten N-Tupel von Funkbaken beziehen, in einer Datenbank.

## Claims

1. A method for aircraft navigation along a predetermined airway, supplying a positioning integrity of the aircraft during flight relative to said airway respecting an expected position precision performance level, the aircraft comprising at least one on-board radio receiver suitable for communicating with at least one land-based radio beacon suitable for supplying a distance of the aircraft relative to said radio beacon,
comprising, during its implementation in the navigation phase of the aircraft, the following steps:
a) from a current position of the aircraft, obtaining (92, 112), from stored data (20), a tuple of radio beacons to be used,
b) obtaining (98-100, 114) a distance measurement of the aircraft relative to each of the N radio beacons of said tuple,
c) computing (104, 116) an integral position, with a probabilistic protection radius around the integral position computed, from distance measurements obtained using a predetermined computing method,
d) using the computed integral position as current integral position to guide the aircraft, **characterized in that** it comprises a prior phase for determining tuples of radio beacons, implemented by a computing device not on board the aircraft, comprising steps consisting, for at least one segment associated with said airway, of determining (60-68; 70-84) at least one tuple of radio beacons usable to compute, by applying said computing method, an integral position of the aircraft when it flies over a spatial area associated with said segment according to said expected position precision performance level, and storing data relative to tuples of determined radio beacons in a database.

2. The method according to claim 1, wherein each segment of the airway is defined by two endpoints called sequencing points, the determination comprising a determination of said sequencing points from passage points defining said airway, the waypoints being spaced apart by a predetermined progress pitch, two successive segments along said airway having different associated tuples of radio beacons.

3. The method according to claim 1, wherein the overflown spatial areas are shown on a meshed map, the method comprising the following steps:
- determining (56) a series of meshes (50) of said map overflown by said airway,
- for each of said meshes (50), determining (60, 62, 64) at least one tuple of radio beacons making it possible to compute an integral position of an aircraft flying over said mesh (50) of said map.

4. The method according to one of claims 1 to 3, wherein the determination of a tuple of radio beacons comprises a test of a plurality of tuples of radio beacons, each tuple comprising N radio beacons selected from among a number L greater than N radio beacons within reception range of an aircraft flying over said spatial area, the test comprising, for each tuple of tested radio beacons, obtaining N distance measurements, each distance measurement being supplied by one of said radio beacons, and an integral position computation and an associated integrity radius, and a comparison of the integrity radius with a determined threshold value as a function of the expected position precision performance level.

5. The method according to any one of claims 1 to 4, comprising, in the navigation phase of the aircraft, during step a) for obtaining a tuple of radio beacons, a selection (92) of a tuple of radio beacons and an availability verification (94) of each of the radio beacons of said selected tuple of radio beacons, and in case of unavailability, selection of another tuple of radio beacons from the stored database.

6. The method according to one of claims 3 or 4, comprising, in the navigation phase of the aircraft, a determination (90), from the current position of the aircraft, of a corresponding map mesh, and the obtainment of a tuple of radio beacons associated with the determined corresponding mesh.

7. The method according to claim 2, comprising, in the navigation phase of the aircraft, a determination, from a current position of the aircraft associated with a current sequencing point, a selection (112) of a tuple of radio beacons stored in association with a segment defined by the current sequencing point and a following sequencing point along the airway of the aircraft.

8. The method according to claims 7, comprising a verification (128) that the aircraft has reached the following sequencing point, and an obtainment of a new tuple of radio beacons to be used following the passing of said following sequencing point.

9. The method according to any one of claims 1 to 8, further comprising after step b) for obtaining distance measurements, a consistency verification (100-102; 118-120) of the obtained distance measurements, and, in case of inconsistency, a determination of a radio beacon supplying an inconsistent distance measurement and, in case of successful determination, a storage, in a database of unusable radio beacons, of an identifier of the or each radio beacon supplying an inconsistent measurement.

10. The method according to claim 9, further comprising raising an alarm (122) if an inconsistency is noted.

11. The method according to any one of claims 1 to 10, comprising, prior to obtaining a distance measurement, tuning (98; 114) at least one on-board radio receiver to an emission frequency of a radio beacon of said tuple.

12. A computer program comprising software instructions which, when executed by an electronic computing device, carry out a navigation method according to claims 1 to 11.

13. A system (2) for aircraft navigation along a predetermined airway, comprising an on-board navigation system (4) and comprising an electronic computing device comprising at least a processor (12) and a memory unit (14), supplying a positioning integrity of the aircraft during flight relative to said airway respecting an expected position precision performance level, and at least one on-board radio receiver (24) on the aircraft suitable for communicating with at least one land-based radio beacon suitable for supplying a distance of the aircraft relative to said radio beacon,
the system (2) comprising modules, implemented in the navigation phase of the aircraft, comprising:
- a module (18) configured to obtain, from a current position of the aircraft, from data (20, 28) stored in said memory unit (14), a tuple of radio beacons to be used,
- a module (22) configured to obtain, by at least one of said on-board receivers, a distance measurement of the aircraft relative to each of the N radio beacons of said tuple,
- a module (26) configured to compute an integral position, with a probabilistic protection radius around the integral position computed, from distance measurements obtained using a predetermined computing method, and
- a module (30) configured to use the computed integral position as current integral position, **characterized in that** the system further comprises: an off-board system (6), adapted to implement a prior phase for navigation data preparation, comprising an electronic computing device (40) suitable for implementing a module (46) for determining tuples of radio beacons, configured, for at least one segment associated with said airway, for determining (60-68; 70-84) at least one tuple of radio beacons usable to compute, by applying said computing method, an integral position of the aircraft when it flies over a spatial area associated with said segment according to said expected position precision performance level and to store determined radio beacon tuple relative data in a database.
